# EUROPÄISCHE PATENTSCHRIFT

(11) **EP 3 799 033 B1**
(45) Veröffentlichungstag und Bekanntmachung des Hinweises auf die Patenterteilung: **25.10.2023**
(21) Anmeldenummer: 20186679.5
(22) Anmeldetag: 20.07.2020
(51) Int. Cl.: G10K 11/178, A01D 41/127

(54) **VERFAHREN ZUR ANSTEUERUNG EINES GERÄUSCHDÄMPFUNGSSYSTEMS FÜR EIN LANDWIRTSCHAFTLICHES ARBEITSFAHRZEUG**
METHOD FOR DRIVING A NOISE DAMPING SYSTEM FOR AN AGRICULTURAL WORKING VEHICLE
PROCÉDÉ DE COMMANDE D'UN SYSTÈME D'ATTÉNUATION ACOUSTIQUE POUR UN VÉHICULE DE TRAVAIL AGRICOLE

(30) Priorität: 25.09.2019 DE 102019125786
(43) Veröffentlichungstag der Anmeldung: 31.03.2021
(73) Patentinhaber: CLAAS E-Systems GmbH, 49201 Dissen (DE)
(72) Erfinder: Reinecke, Max, 33775 Versmold (DE); Große-Hündfeld, Max, 48155 Münster (DE)
(74) Vertreter: CLAAS Gruppe

(56) Entgegenhaltungen:
- EP-A1- 3 456 169
- DE-A1-102013 226 040
- US-A1- 2013 182 865
- US-A1- 2017 200 443

## Beschreibung

Die vorliegende Erfindung betrifft ein Verfahren zur Ansteuerung eines Geräuschdämpfungssystems für ein landwirtschaftliches Arbeitsfahrzeug gemäß dem Oberbegriff des Anspruches 1. Weiterhin betrifft die vorliegende Erfindung ein Geräuschdämpfungssystem gemäß dem Oberbegriff des Anspruches 9 sowie ein landwirtschaftliches Arbeitsfahrzeug gemäß dem Anspruch 14.

Fahrgastzellen von Personenkraftwagen sind für eine Erhöhung des Komforts zumindest passiv geräuschgedämmt ausgeführt. Dabei werden Außengeräusche, insbesondere laute Außengeräusche, welche auf eine Gefahr hinweisen, beispielsweise das Quietschen von bremsenden Reifen, das Hupen eines weiteren Verkehrsteilnehmers oder dergleichen, und über die Jahre und in der intuitiv erlernten Fahrpraxis vieler Fahrzeugnutzer ein entscheidender Bestandteil waren, zunehmend gedämpft. Mit zunehmender Schallisolierung der Fahrzeuge zunehmend gehen diese Geräusche im Innenraum leicht unter, insbesondere, wenn gleichzeitig über eine Medienanlage beispielsweise Musik abgespielt, Radio gehört oder gegebenenfalls auch über eine Freisprecheinrichtung telefoniert wird. Um den Fahrzeugnutzer dennoch auf Situationen aufmerksam zu machen, ist beispielsweise aus der WO 2012/097150 A1 ein Verfahren bekannt, welches vorsieht, Umgebungsgeräusche aufzunehmen und auszuwerten. Hierzu werden die Umgebungsgeräusche hinsichtlich ihrer Frequenz und Amplitude ausgewertet und mit in einer Datenbank hinterlegten Werten verglichen, um diese Umgebungsgeräusche zu qualifizieren und zu priorisieren. Entsprechend ihrer Priorisierung werden die Umgebungsgeräusche in die Fahrgastzelle übertragen. Dabei wird eine Wiedergabe von Geräuschen durch in der Fahrgastzelle aktive Geräuschquellen wie der Medienanlage oder der Freisprecheinrichtung zumindest gedämpft oder unterbrochen.

Ein solches Verfahren ist für den Betrieb eines l Arbeitsfahrzeugs nicht geeignet, da es eine Bedienperson des landwirtschaftlichen Arbeitsfahrzeugs von für den Betrieb des Arbeitsfahrzeugs nützlichen, unter anderem von dem Arbeitsfahrzeug erzeugten, Geräuschen ausschließt.

US 2013/182865 A1 offenbart ein Geräuschdämpfungssystems für ein landwirtschaftliches Arbeitsfahrzeug, welches jedoch nicht einen Betriebskontext ermittelt um in Abhängigkeit von dem ermittelten Betriebskontext vorbestimmte Frequenzbereiche von dem Geräuschdämpfungssystem einer in der Kabine befindlichen Bedienperson des Arbeitsfahrzeugs zuzuleiten.

Somit liegt der Erfindung die Aufgabe zugrunde, ein Verfahren zur Ansteuerung eines Geräuschdämpfungssystems für ein landwirtschaftliches Arbeitsfahrzeug bereitzustellen, welches die Lärmbelastung in einer Kabine des Arbeitsfahrzeugs reduziert und gleichzeitig die Wahrnehmung von für die Bedienperson wichtigen Geräusche ermöglicht.

Diese Aufgabe wird aus verfahrenstechnischer Sicht ausgehend vom Oberbegriff des Anspruchs 1 in Verbindung mit dessen kennzeichnenden Merkmalen gelöst. Aus vorrichtungstechnischer Sicht erfolgt eine Lösung der Aufgabe durch die technischen Merkmale des nebengeordneten Anspruchs 9.

Die hierauf jeweils folgenden, abhängigen Ansprüche geben jeweils vorteilhafte Weiterbildungen der Erfindung wieder.

Gemäß der Erfindung wird ein Verfahren zur Ansteuerung eines Geräuschdämpfungssystems für ein landwirtschaftliches Arbeitsfahrzeug vorgeschlagen, wobei das Arbeitsfahrzeug zumindest ein Arbeitsaggregat, welches von zumindest einer Steuerungsvorrichtung des Arbeitsfahrzeugs angesteuert wird, sowie eine schallgedämpfte Kabine umfasst. Das erfindungsgemäße Verfahren ist gekennzeichnet durch die Schritte:
- Bestimmen von Betriebsparametern des Arbeitsfahrzeugs;
- Ableiten eines Betriebskontextes des Arbeitsfahrzeugs anhand der bestimmten Betriebsparameter; und
- Ansteuerung des Geräuschdämpfungssystems in Abhängigkeit von dem abgeleiteten Betriebskontext, wobei in Abhängigkeit vom Betriebskontext vorbestimmte Frequenzbereiche von dem Geräuschdämpfungssystem einer in der Kabine befindlichen Bedienperson des Arbeitsfahrzeugs zugeleitet werden. Der vom jeweiligen Betriebskontext abhängige Betrieb des Geräuschdämpfungssystems ermöglicht eine differenzierte Erzeugung von Schall unterschiedlicher Frequenzbereiche, welche der Auslöschung von Schall mittels destruktiver Interferenz einerseits und gleichzeitiger Hervorhebung von Schall andererseits dienen. Notwendige oder nützliche Geräusche, die für das Bedienen und Führen des Arbeitsfahrzeugs oder das Erleichtern eines durchzuführenden Arbeitsablaufes hilfreich sind, werden kontextbasiert für die Bedienperson durch Hervorhebung die hörbar gemacht. Es handelt sich dabei um eine aktive Lärmkompensation und/oder eine aktive Geräuscheinspielung. Das von der Bedienperson hörbare Geräuschspektrum wird kontextbasierend beeinflusst.

Im Unterschied zu dem aus der WO 2012/097150 A1 bekannten Verfahren, welches auf erkannte und dem Geräuschdämpfungssystem bekannte Geräusche reagiert, die in der Datenbank hinterlegt sind, deren Datenbestand immer unvollständig sein wird, da stets Geräusche auftreten können, die dem System nicht bekannt sind oder anhand der hinterlegten Geräuschsignatur nicht erkannt werden können, aber dennoch wichtig sind, werden gemäß der Erfindung kontextbasierend Störgeräusche des Arbeitsfahrzeugs gedämpft oder eliminiert und in der Umgebung des Arbeitsfahrzeugs auftretende Nutzgeräusche gegebenenfalls hervorgehoben.

Bevorzugt kann ein Frequenzbereich durch aktive Unterdrückung ausgeblendet werden. Aktive Lärmkompensation, auch Active Noise Cancelling (ANC) genannt, lässt sich bevorzugt bei niedrigen Frequenzen (< 500 Hz) einsetzen, um Störgeräusche des Fahrzeugs zu unterdrücken.

Alternativ oder zusätzlich kann eine passive Dämpfung verwendet werden und der vorbestimmte Frequenzbereich kann aktiv mittels zumindest eines Aktuators in die Kabine eingeleitet werden. Die passive Dämpfung ist insbesondere bei hohen Frequenzen wirksam.

Hierzu kann das, insbesondere kontinuierliche, Bestimmen von Betriebsparametern durch eine Auswertung von Steuerbefehlen der zumindest einen Steuerungsvorrichtung und/oder der Auswertung von Signalen, die von an dem Arbeitsfahrzeug angeordneten Sensorvorrichtungen erfasst werden, durchgeführt werden. Landwirtschaftliche Arbeitsfahrzeuge umfassen zumindest eine Steuerungsvorrichtung, welche der Ansteuerung eines Arbeitsaggregates oder mehrerer Arbeitsaggregate dienen. Arbeitsaggregate im Sinne der Erfindung können neben einem Antriebsmotor sowie einem automatisierten Getriebe, die dem Vortrieb des Arbeitsfahrzeugs dienen, der Be- oder Verarbeitung von Erntegut und/oder der Bearbeitung von landwirtschaftlichen Flächen eingerichtete Vorrichtungen sein, die an dem Arbeitsfahrzeug angeordnet bzw. anbringbar und von diesem angetrieben werden bzw. antreibbar sind. Der Antriebsmotor sowie das Getriebe weisen im Allgemeinen eigene Steuergeräte auf, die mit der Steuerungsvorrichtung des Arbeitsfahrzeugs signaltechnisch in Verbindung stehen. Darüber hinaus weisen der Antriebsmotor sowie das Getriebe einen oder mehrere Drehzahlsensoren auf. Für die Bedienung der Arbeitsaggregate sind Eingabemittel in der Kabine vorgesehen, deren Betätigung durch die zumindest eine Steuerungsvorrichtung in Steuerbefehle umgewandelt wird, um das Arbeitsaggregat oder die Arbeitsaggregate anzusteuern. Die Arbeitsaggregate weisen oftmals ihnen zugeordnete Sensorvorrichtungen auf, um spezifische Arbeitsparameter des jeweiligen Arbeitsaggregates zu bestimmen, um anhand der bestimmten Arbeitsparameter den Betrieb zu überwachen und zu steuern oder zu regeln. Des Weiteren kann das Arbeitsfahrzeug mit einem Positionsortungssensor zur Positionsbestimmung ausgeführt sein, dessen Signale beim Abfahren einer mittels eines Routenplanungssystems erstellten Route herangezogen werden. Durch Auswertung der Steuerbefehle und/oder der Auswertung der Signale einzelner Sensorvorrichtungen kann auf die Betriebsparameter geschlossen werden, um beispielsweise festzustellen, ob das Arbeitsfahrzeug in Betrieb ist, d.h. zumindest der Antriebsmotor aktiv ist. Ebenso lässt sich beispielsweise bestimmen, ob das Arbeitsfahrzeug fährt, wobei zwischen einer Feldfahrt und einer Straßenfahrt unterschieden werden kann. Des Weiteren kann durch die durch Auswertung der Steuerbefehle und/oder der Signale auf den Betriebszustand des Arbeitsaggregates oder der Arbeitsaggregate geschlossen werden.

Somit können in Abhängigkeit von dem abgeleiteten Betriebskontext Phase, Amplitude und/oder Frequenzspektrum der von dem Geräuschdämpfungssystem zugeleiteten Frequenzbereiche verändert werden. Dabei kann in Abhängigkeit vom abgeleiteten Betriebskontext zwischen Nutzgeräuschen und Störgeräuschen unterschieden werden. Wird beispielsweise als Betriebskontext die Straßenfahrt des Arbeitsfahrzugs bestimmt, können vom Arbeitsfahrzeug emittierte Geräusche in unterschiedlicher Weise vom Geräuschdämpfungssystem verarbeitet werden. Beispielsweise sollen die vom Antriebsmotor erzeugten niederfrequenten Geräusche hörbar sein, jedoch mit einer reduzierten Amplitude, während spezifische Umgebungsgeräusche, d.h. von anderen Verkehrsteilnehmern erzeugte Geräusche, insbesondere Signaltöne, deutlich hörbar sein sollen. Hierzu können die Signaltöne durch das Geräuschdämpfungssystem zusätzlich verstärkt werden. So kann eine Stärke der Dämpfung von Geräuschen sowie das Einspielen von Außengeräuschen unter anderem in Abhängigkeit vom Betriebskontext Fahrsituation geregelt werden, wobei der Betriebskontext Fahrsituation den Betrieb des Arbeitsfahrzeugs beispielsweise beim Rangieren, während der Straßenfahrt oder während der Feldfahrt beschreibt.

Es werden als Betriebsparameter physikalisch erfassbare Parameter des zumindest einen Arbeitsaggregates und des Arbeitsfahrzeugs ausgewertet, um aus diesen Betriebsparametern den Betriebskontext zu bestimmen. Die Auswertung gibt Aufschluss über den aktuellen Betriebskontext des Arbeitsfahrzeugs, wobei beispielsweise bei laufenden Arbeitsaggregaten zudem hinsichtlich der Arbeitsbelastung des Arbeitsfahrzeugs und/oder der von diesem angetriebenen Arbeitsaggregate unterschieden werden kann. So kann in Kenntnis von im Betrieb der Arbeitsaggregate hervorgerufene Frequenzen, wie beispielsweise der Antriebsmotorfrequenz oder der Radfrequenz, eine Regelung des Geräuschdämpfungssystem durchgeführt werden. Während die Geräusche der Arbeitsaggregate mit denen fehlerlos arbeitender Arbeitsaggregate durch das Geräuschdämpfungssystem überlagert werden, werden hiervon abweichende, von Arbeitsaggregaten erzeugte, Geräusche an die Bedienperson weitergeleitet.

Gemäß einem weiteren vorteilhaften Aspekt können als Betriebsparameter in der zumindest einen Steuerungsvorrichtung hinterlegte durchzuführende Arbeitsablaufplanungen und/oder Routenplanungen ausgewertet werden. Arbeitsablaufplanungen können beispielsweise bei einem Betrieb des Arbeitsfahrzeugs auf einem zu bearbeitenden Feld die bei einer Vorgewendefahrt automatisiert durchzuführenden Aktionen berücksichtigen. Der aus der Arbeitsablaufplanung bestimmte Betriebskontext Vorgewendefahrt ermöglicht unter Berücksichtigung weiterer Betriebsparameter, die auf eingeschaltete oder ausgeschaltete Arbeitsaggregate schließen lassen, die Ansteuerung des Geräuschdämpfungssystems, um in Abhängigkeit vom abgeleiteten Betriebskontext zwischen Nutzgeräuschen und Störgeräuschen unterscheiden zu können. So werden von dem Geräuschdämpfungssystem bei eingeschalteten Arbeitsaggregaten andere Frequenzbereiche in die Kabine eingeleitet bzw. der Bedienperson zugeleitet, als dies bei während der Vorgewendefahrt ausgeschalteten Arbeitsaggregaten der Fall ist. Im letzteren Fall bedarf es nicht der Dämpfung der Betriebsgeräusche des oder der Arbeitsaggregate.

Weiterhin können durch eine im Vorfeld des Arbeitsfahrzeugs durchgeführte Erkennung erfasste Parameter als Betriebsparameter ausgewertet werden, um darüber auf einen Betriebskontext Betriebsparameter zu schließen. Beispielsweise kann im Rahmen der Vorfelderkennung eine Änderung zumindest eines Betriebsparameters wenigstens eines Arbeitsaggregates durch die Steuerungsvorrichtung durchgeführt werden, die zu einer Änderung des Betriebskontextes führt. Beispielhaft sei das Entleeren eines Korntanks eines als Mähdrescher ausgeführten Arbeitsfahrzeug während des Erntevorgangs auf dem Feld genannt. Das Entleeren kann bei stillstehendem Arbeitsfahrzeug oder fortlaufend während des Erntevorgangs erfolgen. In beiden Fällen ändern sich betriebskontextabhängig die Geräusche, welche durch das Geräuschdämpfungssystem verarbeitet werden. Weiterhin wird die eingangs gestellte Aufgabe durch ein Geräuschdämpfungssystem für ein landwirtschaftliches Arbeitsfahrzeug gemäß dem nebengeordneten Anspruch 9 gelöst.

Gemäß dem Anspruch 9 wird ein Geräuschdämpfungssystem für ein landwirtschaftliches Arbeitsfahrzeug vorgeschlagen, wobei das Arbeitsfahrzeug zumindest ein Arbeitsaggregat, welches von zumindest einer Steuerungsvorrichtung des Arbeitsfahrzeugs ansteuerbar ist, sowie eine schallgedämpfte Kabine umfasst, wobei das Geräuschdämpfungssystem eine Steuereinheit umfasst, wobei die Steuereinheit dazu eingerichtet ist, Betriebsparameter des Arbeitsfahrzeuges zu bestimmen, anhand der Betriebsparameter einen Betriebskontext abzuleiten, in welchem das Arbeitsfahrzeug betrieben wird, und um das Geräuschdämpfungssystem in Abhängigkeit von dem abgeleiteten Betriebskontext anzusteuern, um in Abhängigkeit vom Betriebskontext vorbestimmte Frequenzbereiche durch das Geräuschdämpfungssystem einer in der Kabine befindlichen Bedienperson des Arbeitsfahrzeugs zuzuleiten.

Hierzu kann das Geräuschdämpfungssystem zumindest einen in der Kabine angeordneten, als Lautsprecher und/oder Kopfhörer ausgeführten Aktuator umfassen. Mittels des zumindest einen Lautsprechers und/oder Kopfhörers kann eine aktive Geräuschreduzierung erreicht werden. Dabei wird in Abhängigkeit vom bestimmten Betriebskontext des Arbeitsfahrzeugs die Geräuschdämpfung geregelt bzw. werden Außengeräusche respektive Umgebungsgeräusche eingespielt, die nicht von dem Arbeitsfahrzeug emittiert werden.

Insbesondere kann die Steuereinheit dazu eingerichtet sein, von am Arbeitsfahrzeug angeordneten Sensorvorrichtungen Signale und/oder von der zumindest einen Steuerungsvorrichtung Steuerbefehle zu empfangen und auszuwerten, um daraus einen Betriebskontext abzuleiten. Die Sensorvorrichtungen dienen dabei der Prozessüberwachung. Mittels der Steuerbefehle werden die Arbeitsaggregate respektive deren Aktuatorik angesteuert, beispielsweise eine Motordrehzahl, Antriebsdrehzahl eines Arbeitsaggregates, eine Position einer Komponente eines Arbeitsaggregates und dergleichen mehr. Steuerbefehle können auch Informationen aus einem Routenplanungssystem umfassen, wie zum Beispiel anhand einer Fahrroutenplanung geplante Aktionen des Arbeitsfahrzeugs und/oder dessen Arbeitsaggregate.

Zudem kann an dem Arbeitsfahrzeug zumindest ein Außenmikrofon zur Aufnahme von Umgebungsgeräuschen angeordnet sein, die von dem Geräuschdämpfungssystem eingespielt werden. Außengeräusche können durch das zumindest eine Außenmikrofon aufgenommen und der Bedienperson beispielsweise in den Kopfhörer eingespielt werden. Die Außengeräusche können nach bestimmten Frequenzen oder ähnlichem gefiltert werden. Außengeräusche können beispielsweise Sirenen von Krankenwagen, Polizei, eine sich nähernde Maschine, Rufe von umstehenden Personen, Einweisungen durch umstehende Personen und dergleichen mehr sein. Die Bedienperson kann besser auf Umweltsituationen reagieren, die nicht in ihrem direkten Blickfeld liegen, sondern nur akustisch wahrnehmbar sind. Bevorzugt kann die Steuereinheit dazu eingerichtet sein, die aufgenommen Umgebungsgeräusche zu filtern.

Des Weiteren wird die Aufgabe durch ein landwirtschaftliches Arbeitsfahrzeug mit einem Geräuschdämpfungssystem nach einem der Ansprüche 9 bis 13 gelöst, wobei eine Steuereinheit des Geräuschdämpfungssystems zur Durchführung des Verfahrens nach einem der Ansprüche 1 bis 8 eingerichtet ist.

Die vorliegende Erfindung wird nachstehend anhand eines in den Zeichnungen dargestellten Ausführungsbeispieles näher erläutert.

Es zeigen:
- Fig. 1: eine schematische Ansicht eines als Traktor ausgeführten landwirtschaftlichen Arbeitsfahrzeugs;
- Fig. 2: eine schematische Ansicht eines als Mähdrescher ausgeführten landwirtschaftlichen Arbeitsfahrzeugs; und
- Fig. 3: eine schematische Darstellung eines Geräuschdämpfungssystems.

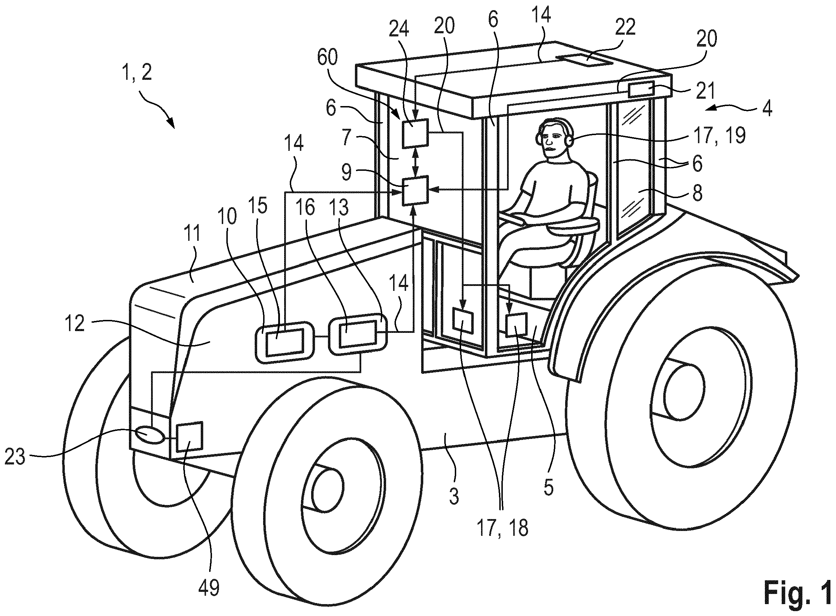

In Fig. 1 ist ein landwirtschaftliche Arbeitsfahrzeug 1 in Gestalt eines Traktors 2 schematisch in perspektivischer Ansicht dargestellt, wobei der grundsätzliche Aufbau eines solchen Traktors 2 als dem Fachmann bekannt angesehen wird. Ein landwirtschaftliches Arbeitsfahrzeug 1 im Sinne der Erfindung kann jedes zur landwirtschaftlichen Arbeit einsetzbares Arbeitsfahrzeug mit einer schallgedämpften Kabine sein. Neben dem Traktor 2 kann das landwirtschaftliche Arbeitsfahrzeug beispielsweise ein Teleskoplader oder eine selbstfahrende Erntemaschine wie ein Mähdrescher 30 oder ein Feldhäcksler sein.

Der Traktor 2 weist umfasst eine Vielzahl von Karosserieteilen, welche an einem Fahrzeugrahmen 3 angeordnet sind. Zur Aufnahme einer Bedienperson ist eine geschlossene, schallgedämpfte Kabine 4 vorgesehen. Die Kabine 4 ist auf dem Fahrzeugrahmen 3 des Traktors 2 angeordnet. Die Kabine 4 umfasst einen Kabinenboden, mit welchem sie an dem Fahrzeugrahmen 3 angeordnet ist. Weiterhin umfasst die Kabine 4 einen Kabinenrahmen 6, an welchem Kabinentüren 5, eine Frontscheibe 7 sowie Seitenscheiben 8 angebracht sind. Innerhalb der Kabine 4 ist üblicherweise ein Bedien- und Steuersystem einer Steuerungsvorrichtung 9 zur Bedienung und Steuerung des landwirtschaftlichen Arbeitsfahrzeugs 1 respektive des Traktors 2 angeordnet. Das Bedien- und Steuersystem der Steuerungsvorrichtung 9 umfasst Eingabe- und Ausgabemittel zur Interaktion der Bedienperson mit diesem. Zum Antrieb und zur Bereitstellung der zum Betrieb des Traktors 2 benötigten Leistung, weist der Traktor 2 einen Antriebsmotor 10 in Form eines Verbrennungsmotors sowie ein Getriebe 13, insbesondere ein stufenloses Schaltgetriebe, auf. Der Antriebsmotor 10 und das Getriebe 13 sind unter einer in einer geschlossenen Position dargestellten Abdeckhaube 11 angeordnet. Die Abdeckhaube 11 bildet, zumindest teilweise, mit weiteren Karosseriebauteilen des Traktors 2 einen Motorraum 12 im Wesentlichen um den Antriebsmotor 10 und das Getriebe 13 herum aus. Der Antriebsmotor 10 weist ein Motorsteuergerät 15 und das Getriebe 13 weist ein Getriebesteuergerät 16 auf. Das Motorsteuergerät 15 und das Getriebesteuergerät 16 sind durch ein Bussystem 14 mit der Steuerungsvorrichtung 9 verbunden, welche durch diese bereitgestellte Informationen an das Bedien- und Steuersystem in der Fahrerkabine 4 überträgt. Sowohl der Antriebsmotor 10 als auch das Getriebe 13 weisen zumindest eine als Drehzahlsensor ausgeführte Sensorvorrichtung auf.

In der Fahrerkabine 4 ist zumindest ein Aktuator 17 vorgesehen, der zur Erzeugung von Schwingungen eingerichtet ist. Der zumindest eine Aktuator 17 kann als ein Lautsprecher 18 und/oder als ein Kopfhörer 19 ausgebildet sein. So kann die in der Kabine 4 des Arbeitsfahrzeugs 1 befindliche Bedienperson einen Kopfhörer 19 tragen, welcher mit einer Steuereinheit 24 eines Geräuschdämpfungssystems 60 vorzugsweise drahtlos, beispielsweise via Bluetooth, verbunden ist. Der als Lautsprecher 18 ausgeführte Aktor 17 ist zur Erzeugung von Schwingungen eingerichtet und mit der Steuereinheit 24 durch eine Signalleitung 20 verbunden. Der zumindest eine als Lautsprecher 18 ausgeführte Aktuator 17 kann im Kabinenboden und/oder im Kabinendach der Kabine 4 angeordnet sein. Alternativ oder zusätzlich kann der zumindest eine Aktuator 17 an einer anderen Stelle im Inneren der Kabine 4 angeordnet sein. An der Kabine 4 ist zumindest ein Außenmikrofon 21 angeordnet, welches durch eine Signalleitung 20 mit der Steuereinheit 24 verbunden ist. Das Außenmikrofon 21 dient dazu, Geräusche von im akustisch wahrnehmbaren Umfeld des Arbeitsfahrzeugs 1 vorhandenen Geräuschquellen 61 zu erfassen. Die Steuereinheit 24 steht durch das Bussystem 14 mit der Steuerungsvorrichtung 9 sowie an dem Traktor 2 angeordneten Sensorvorrichtungen 49 signaltechnisch in Verbindung.

Weiterhin ist an der Kabine 4 ein Positionsortungssensor 22 angeordnet, der durch das Bussystem 14 mit der Steuerungsvorrichtung 9 verbunden ist. Der Positionsortungssensor 22 empfängt Positionssignale eines globalen Satellitennavigationssystems, welche an ein Routenplanungssystem des Arbeitsfahrzeugs 1 übermittelt werden.

An dem als Traktor 2 ausgeführten Arbeitsfahrzeug 1 sind - in Fig. 1 nicht dargestellte - Front -und/oder Heckkraftheber angeordnet, die der Aufnahme von Arbeitsaggregaten dienen. Weiterhin weist der Traktor 2 eine oder mehrere Nebenabtriebswellen 23 auf, von denen eine im Frontbereich und/oder im Heckbereich des Traktors 2 angeordnet ist. Mittels der Nebenabtriebswellen 23 können an dem Traktor 2 angeordnete Arbeitsaggregate angetrieben werden. Der Antrieb und die Ansteuerung der Nebenabtriebswellen 23 erfolgen über das Getriebe 13 bzw. durch das Getriebesteuergerät 16. Lediglich beispielhaft ist der Nebenabtriebswelle 23 eine als Drehzahlsensor ausgeführte Sensorvorrichtung 49 zugeordnet, welche den Betriebszustand der der Nebenabtriebswelle 23 überwacht.

Die Steuereinheit 24 ist zum Empfang und zur Auswertung von Steuerbefehlen eingerichtet, die von der Steuerungsvorrichtung 9 an die Arbeitsaggregate des Traktors 2 übermittelt werden. Darüber hinaus kann die Steuereinheit 24 zur Auswertung von Signalen eingerichtet sein, die von an dem Arbeitsfahrzeug 1 angeordneten Sensorvorrichtungen 49, wie beispielsweise den Drehzahlsensoren, sowie dem Positionsortungssensor 22 erfasst werden.

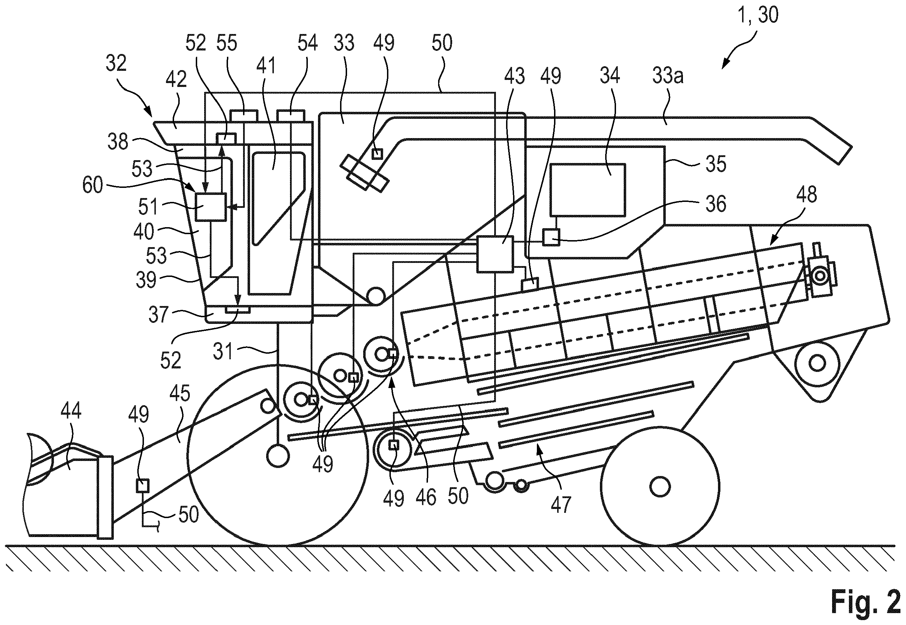

In der Fig. 2 ist mit 30 ein als selbstfahrender Mähdrescher ausgeführtes landwirtschaftliche Arbeitsfahrzeug 1 bezeichnet, der eine an einem Fahrzeugrahmen 31 angeordnete Kabine 32, einen hinter dieser liegenden Korntank 33 sowie sich anschließend an diesen einen als Verbrennungsmotor ausgeführten Antriebsmotor 34 aufweist, der von einem Motorgehäuse 35 abschnittsweise umgeben ist. Dem Antriebsmotor 34 ist ein Motorsteuergerät 36 zugeordnet.

Die Kabine 32 umfasst einen Boden 37, mit welchem die Kabine 32 an dem Fahrzeugrahmen 31 des Mähdreschers 30 angeordnet ist. Weiterhin umfasst die Kabine 32 einen Kabinenrahmen 38, an welchem eine Frontscheibe 39 sowie Seitenscheiben 40 und eine Kabinentür 41 angebracht sind. Die Kabine 32 wird nach oben durch ein Kabinendach 42 begrenzt. Innerhalb der Kabine 32 ist eine Bedien- und Steuereinheit einer Steuerungsvorrichtung 43 zur Bedienung und Steuerung des landwirtschaftlichen Arbeitsfahrzeugs 1 respektive des Mähdreschers 30 angeordnet.

Des Weiteren umfasst der Mähdrescher 30 ein als Vorsatzgerät 44 ausgeführtes Arbeitsaggregat, welches an einem Schrägförderer 45 des Mähdreschers 30 angeordnet ist. Dem Schrägförderer 45 nachgeordnet ist ein als Dreschwerk 46 ausgeführtes Arbeitsaggregat angeordnet, welches dem Bearbeiten von Erntegut dient, welches mit dem Vorsatzgerät 44 aufgenommen und dem Dreschwerk 46 durch den Schrägförderer 45 zugeführt wird. Von dem Dreschwerk 46 verarbeitetes, im Wesentlichen aus Kornbestandteilen bestehendes Erntegut gelangt von diesem zu einer Reinigungsvorrichtung 47. Ein im Wesentlichen aus Nichtkornbestandteilen bestehender Erntegutstrom wird von dem Dreschwerk 46 an eine Abscheidevorrichtung 48 weitergeleitet, welche in dem Erntegutstrom befindliche Kornbestandteile ausscheidet und diese an die Reinigungsvorrichtung 47 abgibt. Zur Entleerung des Korntanks 33 ist eine Korntankentleervorrichtung 33a vorgesehen. Sowohl bei dem Dreschwerk 46, der Reinigungsvorrichtung 47, der Abscheidevorrichtung 48 als auch bei der Korntankentleervorrichtung 33a handelt es sich um Arbeitsaggregate des Mähdreschers 30, welche, wie auch das Vorsatzgerät 44 und der Schrägförderer 45, von Antriebsmotor 34 angetrieben werden. Einem oder mehreren dieser Arbeitsaggregate kann jeweils zumindest eine Sensorvorrichtung 49 zur Überwachung von Betriebs- bzw. Prozessparametern zugeordnet sein. Der Antriebsmotor 34 und dessen Motorsteuergerät 36, die Aktuatorik der Arbeitsaggregate sowie die den Arbeitsaggregaten zugeordneten Sensorvorrichtungen 49 stehen durch ein Bussystem 50 mit der Steuerungsvorrichtung 43 und über diese mit der Bedien- und Steuereinheit signaltechnisch in Wirkverbindung.

Weiterhin weist der Mähdrescher 30 eine Steuereinheit 51 auf. Die Steuereinheit 51 ist signaltechnisch durch das Bussystem 50 mit der Steuerungsvorrichtung 43 verbunden. Die Steuereinheit 51 ist zum Empfang und zur Auswertung von Steuerbefehlen eingerichtet, die von der Steuerungsvorrichtung 43 an die Arbeitsaggregate des Mähdreschers 30 übermittelt werden. Darüber hinaus kann die Steuereinheit 51 zur Auswertung von Signalen eingerichtet sein, die von an dem Mähdrescher 30 angeordneten Sensorvorrichtungen 49 erfasst werden, die der Überwachung von Betriebs- und/oder Prozessparametern der Arbeitsaggregate dienen.

In der Kabine 32 des Mähdreschers 30 können sich im Boden 37 sowie im Kabinendach 42 Aktuatoren 52, welche zur Erzeugung von Schwingungen eingerichtet sind, befinden. Alternativ oder zusätzlich können die Aktuator 17 auch an einer anderen Stelle im Inneren der Kabine 32 angeordnet sein. Die Aktuatoren 52 sind zu ihrer Ansteuerung durch Signalleitungen 53 mit der Steuereinheit 51 verbunden.

Alternativ kann der zumindest eine Aktuator 52 als ein Kopfhörer ausgebildet sein. So kann die in der Kabine 32 des Mähdreschers 30 befindliche Bedienperson einen Kopfhörer tragen, welcher mit der Steuereinheit 51 des Geräuschdämpfungssystems 60 vorzugsweise drahtlos, beispielsweise via Bluetooth, verbunden ist. An der Kabine 32 ist ein Positionsortungssensor 54 angeordnet, der durch das Bussystem 50 mit der Steuerungsvorrichtung 43 verbunden ist. Weiterhin ist an der Kabine 32 zumindest ein Außenmikrofon 55 angeordnet, welches durch eine Signalleitung 53 mit der Steuereinheit 51 verbunden ist. Das Außenmikrofon 51 dient dazu, Geräusche von im akustisch wahrnehmbaren Umfeld des Arbeitsfahrzeugs 1 vorhandenen Geräuschquellen 61 zu erfassen.

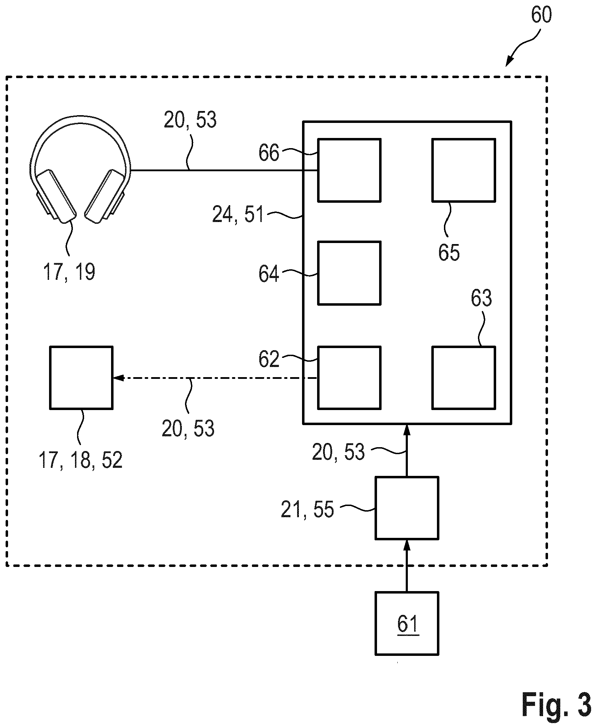

In Fig. 3 ist eine schematische Darstellung eines Geräuschdämpfungssystems 60 gezeigt, welches Teil des landwirtschaftlichen Arbeitsfahrzeugs 1 ist. Dem Geräuschdämpfungssystem 60 kommt die Aufgabe zu, Geräusche von zumindest einer Geräuschquelle 61, die Teil des Arbeitsfahrzeugs 1 ist, wie dessen Arbeitsaggregate, oder von zumindest einer Geräuschquelle 61, die sich in akustisch wahrnehmbarer Umgebung des Arbeitsfahrzeugs 1 befindet, nach Stör- und Nutzgeräuschen zu differenzieren und entweder durch aktive Lärmkompensation und/oder passive zu dämpfen oder zu eliminieren oder zu verstärken. Die akustische Wahrnehmung, Auswertung und Behandlung von spezifischen Geräuschen von Arbeitsaggregaten eines Arbeitsfahrzeugs durch ein Geräuschdämpfungssystem ist in der EP 3 456 169 A1 beschrieben, auf deren Offenbarung hiermit Bezug genommen wird.

Zur näheren Veranschaulichung wird die Funktionsweise des Geräuschdämpfungssystems 60 beispielhaft anhand des als Traktor 2 ausgeführten Arbeitsfahrzeugs 1 erläutert. Die Funktionsweise des Geräuschdämpfungssystems 60 gilt entsprechend für ein als selbstfahrende Erntemaschine ausgeführtes landwirtschaftliches Arbeitsfahrzeug 1 wie den in Fig. 2 dargestellten Mähdrescher 30 oder einen Feldhäcksler.

Die Steuereinheit 24, welche Teil des Geräuschdämpfungssystems 60 ist, umfasst eine Auswerteeinheit 62 zur Auswertung der von an dem Arbeitsfahrzeug 1 angeordneten akustischen Sensoren erfassten Geräusche der Arbeitsaggregate als Geräuschquelle 61 sowie dem zumindest einen Außenmikrofon 21. Mittels der Auswerteeinheit 62 lassen sich weiterhin Steuerbefehle der Steuerungsvorrichtung 9 sowie der Steuergeräte 15 und 16 auswerten. Die Auswerteeinheit 62 verarbeitet auch Signale der Sensorvorrichtungen 49, welche den Betrieb der Arbeitsaggregate des Arbeitsfahrzeugs 1 überwachen. Von dem Geräuschdämpfungssystem 60 ist eine Filtereinheit 63 umfasst, welche dem gezielten Herausfiltern der als akustische Nutzsignale an den Kopfhörer 19 bzw. den Lautsprecher 18 weiterzuleitenden Signale dient, sowie eine Verstärkereinheit 64 und eine Modulationseinheit 65 zur Klangveränderung. Die Filtereinheit 63 umfasst hierzu zumindest einen Bandpassfilter, der durch die Steuereinheit 24 individuell ansteuerbar ist. Für die Übertragung der akustischen Nutzsignale an den Kopfhörer 19 und/oder den Lautsprecher 18 sowie die aktive Lärmkompensation ist eine Sendeeinheit 66 vorgesehen, welche die Nutzsignale sowie die Signale zur Auslöschung von Schall mittels destruktiver Interferenz bevorzugt drahtlos überträgt.

Die Steuereinheit 24 ist dazu eingerichtet, Betriebsparameter des Arbeitsfahrzeuges 1 zu bestimmen, um anhand der Betriebsparameter einen Betriebskontext abzuleiten, in welchem das Arbeitsfahrzeug 1 betrieben wird. Das Geräuschdämpfungssystem 60 wird in Abhängigkeit von dem abgeleiteten Betriebskontext angesteuert, um in Abhängigkeit von dem abgeleiteten Betriebskontext vorbestimmte Frequenzbereiche durch das Geräuschdämpfungssystem 60 der in der Kabine 4 befindlichen Bedienperson des Arbeitsfahrzeugs 1 zuzuleiten. Die durch das Geräuschdämpfungssystem 60 durchgeführte aktive Lärmkompensation, nachfolgend als ANC-Funktion bezeichnet, kann kontextbasiert reduziert oder ganz ausgeschaltet werden. Dies kann beispielsweise anhand der Schalterstellung eines Straßenfahrschalters, anhand von Einstellungen zumindest eines Arbeitsaggregates des Arbeitsfahrzeugs 1, einer mittels des Positionssensors 22 bestimmten Position des Arbeitsfahrzeugs 1 und/oder anhand eines durch das zumindest eine Außenmikrofon 21 erfassten Umweltgeräuschpegel erfolgen.

Die Steuereinheit 24 kann dazu eingerichtet sein, die ANC-Funktion auf ein Mindestmaß, beispielsweise einen maximal zulässigen Schallpegel am Ohr der Bedienperson, zu begrenzen und nur in lauten Betriebssituationen, in der Regel im aktiven Arbeitseinsatz des Arbeitsfahrzeugs 1 einzugreifen. In anderen Betriebssituationen, beispielsweise steht das Arbeitsfahrzeug 1 mit im Leerlauf befindlichen Antriebsmotor 10 als einem Arbeitsaggregat oder fährt ohne Erntegut aufzunehmen über ein Feld, wird die ANC-Funktion minimiert oder ganz ausgeschaltet, so dass die Bedienperson möglichst gut die Umgebungsgeräusche wahrnehmen kann. Es wäre auch denkbar in solchen Betriebssituationen nur tiefe Frequenzen, beispielsweise kleiner 100 Hz (Beginn des Sprachbereichs), zu dämpfen und höhere Frequenzen nicht zu dämpfen und ggf. sogar zu verstärken. Um diese verschiedenen Betriebssituationen zu erkennen, ist es sinnvoll, neben dem aktuellen Schallpegel auch andere Betriebskontextinformationen wie, zurückliegende Ereignisse, Signale der Prozesssensorik, aktuelle und geplante Einstellungen der Arbeitsaggregate aus Steuerungsvorrichtung 9 und/oder Steuergeräten 15, 16 sowie geplante Aktionen, die anhand einer Fahrroutenplanung bestimmbar sind, zu berücksichtigen.

Nachstehend werden beispielhaft mögliche Betriebskontexte aufgeführt, die durch das Bestimmen von Betriebs- und/oder Prozessparametern, durch eine Auswertung von Steuerbefehlen der zumindest einen Steuerungsvorrichtung 9 und /oder der Steuergeräte 15, 16 und/oder der Auswertung von Signalen, die von an dem Arbeitsfahrzeug 1 angeordneten Sensorvorrichtungen 49 erfasst werden, ermittelt werden.

Bei stillstehendem Arbeitsfahrzeug 1 und laufendem Antriebsmotor 4, insbesondere im Betrieb des Antriebsmotor 4 unter Volllast, besteht die Anforderung an die Möglichkeit einer akustischen Kontrolle des Antriebsmotor 4. Entsprechend des daraus abgeleiteten Betriebskontextes wird das Geräuschdämpfungssystem 60 durch die Steuereinheit 24 in der Weise angesteuert, dass Motorgeräusche mit originalem Frequenzspektrum und leicht abgesenktem Pegel an die Bedienperson in der Kabine 4 übertragen werden.

Wird als Betriebskontext des Arbeitsfahrzeugs 1 anhand der bestimmten Betriebsparameter festgestellt, dass das Arbeitsfahrzeug 1 stillsteht, der Antriebsmotor 4 eingeschaltet ist und alle Arbeitsaggregate des Arbeitsfahrzeugs 1 mit Ausnahme eines Arbeitsaggregates, wie einem Anbaugerät, eingeschaltet sind, besteht die Anforderung an die Möglichkeit einer akustischen Kontrolle des Antriebsmotor 4 und der aktiven Arbeitsaggregate. Entsprechend dieses Betriebskontextes werden die Motorgeräusche und die Geräusche der aktiven Arbeitsaggregate mit originalem Frequenzspektrum in der Kabine 4 übertragen. Eine Absenkung der Pegel ist dabei denkbar.

Das Führen des Arbeitsfahrzeugs 1 im öffentlichen Straßenverkehr lässt sich unter anderem anhand der Schalterstellung des sogenannten Straßenfahrschalters bestimmen. Ebenso lässt sich dies durch eine Auswertung der Signale des Positionssensors 22 und/oder des Routenplans bestimmen. Bei Straßenfahrt besteht die Anforderung an die Bedienperson beispielsweise den Antriebsmotor und Hydropumpen bzw. Hydromotoren bei einem hydrostatischen Fahrantrieb akustisch wahrnehmen zu können. Ebenfalls müssen externe Signaltöne wie eine Hupe, Warnsignale an einem Bahnübergang, Martinshörner, etc., für die Bedienperson deutlich hörbar sein Dazu können die Frequenzen des Antriebsmotors 4 mit reduzierter Amplitude eingespielt werden, während ein drehzahlabhängiges Frequenzband der Hydraulikaggregate, d.h. von Hydropumpen und Hydromotoren, durch die ANC-Funktion leicht gedämpft werden. Dies kann auf Basis einer Ordnungsanalyse der von den Arbeitsaggregaten erzeugten Schwingungen erfolgen. Dem gegenüber werden Frequenzbereich für die externen Signaltöne offenlassen bzw. verstärkt.

Bei einem Rangieren des Arbeitsfahrzeugs 1 als auch bei einem An- oder Abkoppeln eines Anbaugerätes, eines Vorsatzgerätes oder eines Anhängers an bzw. vom des Arbeitsfahrzeugs 1 besteht die Anforderung an die Bedienperson darin, dass der Antriebsmotor 4 lediglich in einem reduzierten Maß wahrnehmbar ist, so dass eine akustische Kontrolle des Antriebsmotors 4 möglich ist, zugleich aber Umgebungsgeräusche stärker hervorgehoben werden. Hierzu kann eine Aufnahme von Außengeräuschen über das zumindest eine Außenmikrofon 21 erfolgen, dessen Pegel so angepasst werden kann, dass Außengeräusche überhöht werden. Für eine richtungsabhängige Wiedergabe kann ein Außenmikrofonarray an dem Arbeitsfahrzeug 1 vorgesehen werden. Dies dient dazu, entsprechend des bestimmten Betriebskontextes beim Rangieren bzw. An- oder Abkoppeln eine akustische Hinweise einer einweisenden Person aber auch umgebene Fahrzeug akustisch deutlicher wahrnehmen zu können, um Kollisionen zu vermeiden.

Wird anhand der Betriebsparameter der Betriebskontext Feldfahrt mit eingeschalteten Arbeitsaggregaten, jedoch inaktivem Erntebetrieb bestimmt, so kann ein Abmischen der auf Basis der Ordnungsanalyse durch die ANC-Funktion beeinflussten Geräusche erfolgen, so dass die Pegel der von den Arbeitsaggregaten erzeugten Geräusche möglichst gleichmäßig wahrnehmbar sind.

Wird der Betriebskontext Feldfahrt mit eingeschalteten Arbeitsaggregaten und aktivem Erntebetrieb bestimmt, tritt der Schutz der Bedienperson vor zu hohen Pegeln aufgrund des Ernteprozesses in den Vordergrund. Zudem soll eine Kommunikation mittels Kommunikationsmitteln aus dem Inneren der Kabine 4 heraus möglich sein. Hierzu wird das Geräuschdämpfungssystem 60 durch die Steuereinheit 24 in der Weise angesteuert, dass die Frequenzen der Arbeitsaggregate und des Antriebsmotors 10 mittels der ANC-Funktion stark bedämpft werden.

Wird während der Feldfahrt mit aktivem Erntebetrieb durch die Auswertung eine Überlastsituation eines der Arbeitsaggregate, insbesondere des Antriebsmotors 10, bestimmt, besteht die Anforderung an die Bedienperson darin, dass diese die Überlast akustisch wahrnehmen kann. In diesem Betriebskontext wird das Geräuschdämpfungssystem 60 durch die Steuereinheit 24 in der Weise angesteuert, dass es zu einem Ausschleichen der Bedämpfung synchron zum Absinken der Drehzahl des Antriebsmotors 10 ab einer Mindestdrehzahl kommt. Die Bedienperson kann dadurch auf ein Absterben des Antriebsmotors 10 wegen der auftretenden Überlastsituation gezielt aufmerksam gemacht werden.

Bei einem Betrieb des Arbeitsfahrzeugs 1 in einem Allradantriebsmodus soll es der Bedienperson ermöglicht werden, auftretenden Schlupf akustisch wahrzunehmen. Im Allradantriebsmodus tritt am Vorderrad und am Hinterrad im Wesentlichen die gleiche Frequenz auf. Bei Schlupf führt dies zu einer Schwebung. Als Schwebung wird der Effekt bezeichnet, dass die Resultierende der additiven Überlagerung zweier Schwingungen, die sich in ihrer Frequenz nur wenig voneinander unterscheiden, eine periodisch zu- und abnehmende Amplitude aufweist. Schwebungen treten bei Schallwellen auf, da für diese das Superpositionsprinzip gilt. Da sich die Momentanwerte der Ausgangsschwingungen je nach Phasenlage gegenseitig periodisch verstärken oder abschwächen, hat die Resultierende eine an- und abschwellende Amplitude. Die Frequenz dieses Wechsels ist umso höher, je größer die Differenz der Ausgangsfrequenzen von Vorderrad und Hinterrad ist. Dieses An- und Abschwellen wird im Rahmen des betriebskontextbasierenden Geräuschdämpfungssystems 60 der Bedienperson in der Kabine 4 des Arbeitsfahrzeugs 1 zugeleitet.

**Bezugszeichenliste**

| | | | |
|---|---|---|---|
| 1 | Arbeitsfahrzeug | 34 | Antriebsmotor |
| 2 | Traktor | 35 | Motorgehäuse |
| 3 | Fahrzeugrahmen | 36 | Motorsteuergerät |
| 4 | Kabine | 37 | Boden |
| 5 | Kabinentür | 38 | Kabinenrahmen |
| 6 | Kabinenrahmen | 39 | Frontscheibe |
| 7 | Frontscheibe | 40 | Seitenscheibe |
| 8 | Seitenscheibe | 41 | Kabinentür |
| 9 | Steuerungsvorrichtung | 42 | Kabinendach |
| 10 | Antriebsmotor | 43 | Steuerungsvorrichtung |
| 11 | Abdeckhaube | 44 | Vorsatzgerät |
| 12 | Motorraum | 45 | Schrägförderer |
| 13 | Getriebe | 46 | Dreschwerk |
| 14 | Bussystem | 47 | Reinigungsvorrichtung |
| 15 | Motorsteuergerät | 48 | Abscheidevorrichtung |
| 16 | Getriebesteuergerät | 49 | Sensorvorrichtung |
| 17 | Aktuator | 50 | Bussystem |
| 18 | Lautsprecher | 51 | Steuereinheit |
| 19 | Kopfhörer | 52 | Aktuator |
| 20 | Signalleitung | 53 | Signalleitung |
| 21 | Außenmikrofon | 54 | Positionsortungssensor |
| 22 | Positionsortungssensor | 55 | Außenmikrofon |
| 23 | Nebenabtriebswelle | | |
| 24 | Steuereinheit | 60 | Geräuschdämpfungssystem |
| | | 61 | Geräuschquelle |
| 30 | Mähdrescher | 62 | Auswerteeinheit |
| 31 | Fahrzeugrahmen | 63 | Filtereinheit |
| 32 | Kabine | 64 | Verstärkereinheit |
| 33 | Korntank | 65 | Modulationseinheit |
| 33a | Korntankentleervorrichtung | 66 | Sendeeinheit |

## Patentansprüche

1. Verfahren zur Ansteuerung eines Geräuschdämpfungssystems (60) für ein landwirtschaftliches Arbeitsfahrzeug (1, 2, 30), mit zumindest einem Arbeitsaggregat (10, 13, 23, 34, 44, 46, 47, 48), welches von zumindest einer Steuerungsvorrichtung (9, 43) des Arbeitsfahrzeugs (1, 2, 30) angesteuert wird, sowie mit einer schallgedämpften Kabine (4, 32), umfassend die Schritte:
- Bestimmen von Betriebsparametern des Arbeitsfahrzeugs (1, 2, 30);
- Ermitteln eines Betriebskontextes des Arbeitsfahrzeugs (1, 2, 30), in welchem das Arbeitsfahrzeug betrieben wird, anhand der Betriebsparameter; und
- Ansteuerung des Geräuschdämpfungssystems (60) in Abhängigkeit von dem ermittelten Betriebskontext, wobei in Abhängigkeit vom Betriebskontext vorbestimmte Frequenzbereiche von dem Geräuschdämpfungssystem (60) einer in der Kabine (4, 32) befindlichen Bedienperson des Arbeitsfahrzeugs (1, 2, 30) zugeleitet werden, wobei als Betriebsparameter zumindest physikalisch erfassbare Parameter des zumindest einen Arbeitsaggregates (10, 13, 23, 34, 44, 46, 47, 48) und des Arbeitsfahrzeugs (1, 2, 30) ausgewertet werden.

2. Verfahren nach Anspruch 1, **dadurch gekennzeichnet, dass** ein Frequenzbereich durch aktive Unterdrückung ausgeblendet wird.

3. Verfahren nach Anspruch 1 oder 2, **dadurch gekennzeichnet, dass** eine passive Dämpfung verwendet wird und der vorbestimmte Frequenzbereich aktiv mittels zumindest eines Aktuators (17, 52) in die Kabine (4, 32) eingeleitet wird.

4. Verfahren nach einem der Ansprüche 1 bis 3, **dadurch gekennzeichnet, dass** das Bestimmen von Betriebsparametern durch eine Auswertung von Steuerbefehlen der zumindest einen Steuerungsvorrichtung (9, 43) und/oder der Auswertung von Signalen, die von an dem Arbeitsfahrzeug (1, 2, 30) angeordneten Sensorvorrichtungen (22, 49, 54) erfasst werden, durchgeführt wird.

5. Verfahren nach einem der Ansprüche 1 bis 4, **dadurch gekennzeichnet, dass** in Abhängigkeit vom ermittelten Betriebskontext Phase, Amplitude und/oder Frequenzspektrum der von dem Geräuschdämpfungssystem (60) zugeleiteten Frequenzbereiche verändert werden.

6. Verfahren nach einem der Ansprüche 1 bis 5, **dadurch gekennzeichnet, dass** in Abhängigkeit vom ermittelten Betriebskontext zwischen Nutzgeräuschen und Störgeräuschen unterschieden wird.

7. Verfahren nach einem der Ansprüche 1 bis 6, **dadurch gekennzeichnet, dass** als Betriebsparameter in der zumindest einen Steuerungsvorrichtung (9, 43) hinterlegte Arbeitsablaufplanungen und/oder Routenplanungen ausgewertet werden.

8. Verfahren nach einem der Ansprüche 1 bis 7, **dadurch gekennzeichnet, dass** durch eine im Vorfeld des Arbeitsfahrzeugs (1, 2, 30) durchgeführte Erkennung erfasste Parameter als Betriebsparameter ausgewertet werden.

9. Geräuschdämpfungssystem (60) für ein landwirtschaftliches Arbeitsfahrzeug (1, 2, 30), wobei das Arbeitsfahrzeug (1, 2, 30) zumindest ein Arbeitsaggregat (10, 13, 23, 34, 44, 46, 47, 48), welches von zumindest einer Steuerungsvorrichtung (9, 43) des Arbeitsfahrzeugs (1, 2, 30) ansteuerbar ist, sowie eine schallgedämpfte Kabine (4, 32) umfasst, wobei das Geräuschdämpfungssystem (60) eine Steuereinheit (24, 51) umfasst, wobei die Steuereinheit (24, 51) dazu eingerichtet ist, Betriebsparameter des Arbeitsfahrzeuges (1, 2, 30) zu bestimmen, anhand der Betriebsparameter einen Betriebskontext zu ermitteln, in welchem das Arbeitsfahrzeug (1, 2, 30) betrieben wird, und um das Geräuschdämpfungssystem (60) in Abhängigkeit von dem ermittelten Betriebskontext anzusteuern, um in Abhängigkeit vom Betriebskontext vorbestimmte Frequenzbereiche durch das Geräuschdämpfungssystem (60) einer in der Kabine (4, 32) befindlichen Bedienperson des Arbeitsfahrzeugs (1, 2, 30) zuzuleiten, wobei als Betriebsparameter zumindest physikalisch erfassbare Parameter des zumindest einen Arbeitsaggregates (10, 13, 23, 34, 44, 46, 47, 48) und des Arbeitsfahrzeugs (1, 2, 30) ausgewertet werden.

10. Geräuschdämpfungssystem (60) nach Anspruch 9, **dadurch gekennzeichnet, dass** das Geräuschdämpfungssystem (60) zumindest einen in der Kabine (4, 32) angeordneten, als Lautsprecher (18) und/oder Kopfhörer (19) ausgeführten Aktuator (17, 52) umfasst.

11. Geräuschdämpfungssystem (60) nach Anspruch 9 oder 10, **dadurch gekennzeichnet, dass** die Steuereinheit (24, 51) dazu eingerichtet ist, von am Arbeitsfahrzeug (1, 2, 30) angeordneten Sensorvorrichtungen (22, 49, 54) Signale und/oder von der zumindest einen Steuerungsvorrichtung (9, 43) Steuerbefehle zu empfangen und auszuwerten, um daraus einen Betriebskontext abzuleiten.

12. Geräuschdämpfungssystem (60) nach einem der Ansprüche 9 bis 11, **dadurch gekennzeichnet, dass** an dem Arbeitsfahrzeug (1, 2, 30) zumindest ein Außenmikrofon (21, 55) zur Aufnahme von Umgebungsgeräuschen angeordnet ist, die von dem Geräuschdämpfungssystem (60) eingespielt werden.

13. Geräuschdämpfungssystem (60) nach Anspruch 12, **dadurch gekennzeichnet, dass** die Steuereinheit (24, 51) dazu eingerichtet ist, die aufgenommen Umgebungsgeräusche zu filtern.

14. Landwirtschaftliches Arbeitsfahrzeug (1, 2, 30) mit einem Geräuschdämpfungssystem (60) nach einem der Ansprüche 9 bis 13, wobei eine Steuereinheit (24, 51) des Geräuschdämpfungssystems (60) zur Durchführung des Verfahrens nach einem der Ansprüche 1 bis 9 eingerichtet ist.

## Claims

1. A method for controlling a noise reduction system (60) for an agricultural working vehicle (1, 2, 30), with at least one working assembly (10, 13, 23, 34, 44, 46, 47, 48) which is controlled by at least one control device (9, 43) of the working vehicle (1, 2, 30), as well as with a sound-insulated cab (4, 32), comprising the steps of:
- specifying operating parameters of the working vehicle (1, 2, 30);
- with the aid of the operating parameters, determining an operating context of the working vehicle (1, 2, 30) in which the working vehicle is operated; and
- controlling the noise reduction system (60) as a function of the determined operating context, wherein frequency ranges which are prespecified as a function of the operating context are supplied by the noise reduction system (60) to an operative of the working vehicle (1, 2, 30) located in the cab (4, 32), wherein at least physically detectable parameters of the at least one working assembly (10, 13, 23, 34, 44, 46, 47, 48) and of the working vehicle (1, 2, 30) are evaluated as the operating parameters.

2. The method according to claim 1, **characterized in that** a frequency range is suppressed by active cancellation.

3. The method according to claim 1 or claim 2, **characterized in that** a passive damping is employed and the prespecified frequency range is actively introduced into the cab (4, 32) by means of at least one actuator (17, 52).

4. The method according to one of claims 1 to 3, **characterized in that** the specification of operating parameters is carried out by an evaluation of control commands from the at least one control device (9, 43) and/or by the evaluation of signals which are detected by sensor devices (22, 49, 54) disposed on the working vehicle (1, 2, 30).

5. The method according to one of claims 1 to 4, **characterized in that** phase, amplitude and/or frequency spectrum of the frequency range supplied by the noise reduction system (60) are varied as a function of the determined operating context.

6. The method according to one of claims 1 to 5, **characterized in that** a distinction is made between useful noises and interfering noises as a function of the determined operating context.

7. The method according to one of claims 1 to 6, **characterized in that** stored working procedure plans and/or route plans are evaluated as the operating parameters in the at least one control device (9, 43).

8. The method according to one of claims 1 to 7, **characterized in that** parameters detected in the frontal area of the working vehicle (1, 2, 30) are evaluated as the operating parameters.

9. A noise reduction system (60) for an agricultural working vehicle (1, 2, 30), wherein the working vehicle (1, 2, 30) comprises at least one working assembly (10, 13, 23, 34, 44, 46, 47, 48) which can be controlled by at least one control device (9, 43) of the working vehicle (1, 2, 30), as well as a sound-insulated cab (4, 32), wherein the noise reduction system (60) comprises a control unit (24, 51), wherein the control unit (24, 51) is configured to specify operating parameters of the working vehicle (1, 2, 30), to determine an operating context in which the working vehicle (1, 2, 30) is operated with the aid of the operating parameters, and to control the noise reduction system (60) as a function of the determined operating context in order to supply prespecified frequency ranges as a function of the operating context through the noise damping system (60) to an operative of the working vehicle (1, 2, 30) located in the cab (4, 32), wherein at least physically detectable parameters of the at least one working assembly (10, 13, 23, 34, 44, 46, 47, 48) and of the working vehicle (1, 2, 30) are evaluated as the operating parameters.

10. The noise reduction system (60) according to claim 9, **characterized in that** the noise reduction system (60) comprises at least one actuator (17, 52), configured as a speaker (18) and/or headphones (19), disposed in the cab (4, 32).

11. The noise reduction system (60) according to claim 9 or claim 10, **characterized in that** the control unit (24, 51) is configured to receive and evaluate signals from sensor devices (22, 49, 54) disposed on the working vehicle (1, 2, 30) and/or control commands from the at least one control device (9, 43) in order to derive an operating context therefrom.

12. The noise reduction system (60) according to one of claims 9 to 11, **characterized in that** at least one external microphone (21, 55) is disposed on the working vehicle (1, 2, 30) for receiving environmental noises which are imported by the noise reduction system (60).

13. The noise reduction system (60) according to claim 12, **characterized in that** the control unit (24, 51) is configured to filter the received environmental noises.

14. An agricultural working vehicle (1, 2, 30) with a noise reduction system (60) according to one of claims 9 to 13, wherein a control unit (24, 51) of the noise reduction system (60) is configured to carry out the method according to one of claims 1 to 9.

## Revendications

1. Procédé de commande d'un système d'insonorisation (60) pour un véhicule de travail agricole (1, 2, 30), comprenant au moins un organe de travail (10, 13, 23, 34, 44, 46, 47, 48) qui est commandé par au moins un dispositif de commande (9, 43) du véhicule de travail (1, 2, 30), ainsi que comprenant une cabine insonorisée (4, 32), incluant les étapes :
- détermination de paramètres de fonctionnement du véhicule de travail (1, 2, 30) ;
- détermination, à l'aide des paramètres de fonctionnement, d'un contexte de fonctionnement du véhicule de travail (1, 2, 30) dans lequel le véhicule de travail est exploité, et
- commande du système d'insonorisation (60) en fonction du contexte de fonctionnement déterminé, des plages fréquentielles prédéterminées en fonction du contexte de fonctionnement étant envoyées par le système d'insonorisation (60) à une personne utilisatrice du véhicule de travail (1, 2, 30) se trouvant dans la cabine (4, 32), au moins des paramètres physiquement détectables du au moins un organe de travail (10, 13, 23, 34, 44, 46, 47, 48) et du véhicule de travail étant analysés comme paramètres de fonctionnement.

2. Procédé selon la revendication 1, **caractérisé en ce qu'**une plage fréquentielle est supprimée par atténuation active.

3. Procédé selon la revendication 1 ou 2, **caractérisé en ce qu'**un affaiblissement passif est utilisé et la plage fréquentielle prédéterminée est envoyée activement dans la cabine (4, 32) au moyen au moins d'un actionneur (17, 52).

4. Procédé selon une des revendications 1 à 3, **caractérisé en ce que** la détermination de paramètres de fonctionnement est réalisée par l'intermédiaire d'une analyse d'instructions de commande du au moins un dispositif de commande (9, 43) et/ou de l'analyse de signaux qui sont détectés par des dispositifs de capteurs (22, 49, 54) disposés sur le véhicule de travail (1, 2, 30) .

5. Procédé selon une des revendications 1 à 4, **caractérisé en ce que** la phase, l'amplitude et/ou le spectre de fréquences des plages fréquentielles envoyées par le système d'insonorisation (60) sont modifiés en fonction du contexte de fonctionnement déterminé.

6. Procédé selon une des revendications 1 à 5, **caractérisé en ce qu'**une distinction est faite entre bruits utiles et bruits parasites en fonction du contexte de fonctionnement déterminé.

7. Procédé selon une des revendications 1 à 6, **caractérisé en ce que** des planifications de séquences de travail et/ou planifications d'itinéraires enregistrés dans le au moins un dispositif de commande (9, 43) sont analysées comme paramètres de fonctionnement.

8. Procédé selon une des revendications 1 à 7, **caractérisé en ce que** des paramètres détectés par l'intermédiaire d'une reconnaissance effectuée dans la zone d'approche du véhicule de travail (1, 2, 30) sont analysés comme paramètres de fonctionnement.

9. Système d'insonorisation (60) pour un véhicule de travail agricole (1, 2, 30), le véhicule de travail (1, 2, 30), comprenant au moins un organe de travail (10, 13, 23, 34, 44, 46, 47, 48) qui est commandable par au moins un dispositif de commande (9, 43) du véhicule de travail (1, 2, 30), ainsi que comprenant une cabine insonorisée (4, 32), le système d'insonorisation (60) incluant une unité de commande (24, 51), l'unité de commande (24, 51) étant agencée pour déterminer des paramètres de fonctionnement du véhicule de travail (1, 2, 30), pour déterminer à l'aide des paramètres de fonctionnement un contexte de fonctionnement dans lequel le véhicule de travail (1, 2, 30) est exploité et pour commander le système d'insonorisation (60) en fonction du contexte de fonctionnement déterminé afin d'envoyer, par l'intermédiaire du système d'insonorisation (60), des plages fréquentielles prédéterminées en fonction du contexte de fonctionnement à une personne utilisatrice du véhicule de travail (1, 2, 30) se trouvant dans la cabine (4, 32), au moins des paramètres physiquement détectables du au moins un organe de travail (10, 13, 23, 34, 44, 46, 47, 48) et du véhicule de travail (1, 2, 30) étant analysés comme paramètres de fonctionnement.

10. Système d'insonorisation (60) selon la revendication 9, **caractérisé en ce que** le système d'insonorisation (60) inclut au moins un actionneur (17, 52) disposé dans la cabine (4, 32), conformé en haut-parleur (18) et/ou casque d'écoute (19).

11. Système d'insonorisation (60) selon la revendication 9 ou 10, **caractérisé en ce que** l'unité de commande (24, 51) est agencée pour recevoir des signaux depuis des dispositifs de capteurs (22, 49, 54) disposés sur le véhicule de travail (1, 2, 30) et/ou des instructions de commande depuis le au moins un dispositif de commande (9, 43) et pour les analyser afin d'en déduire un contexte de fonctionnement.

12. Système d'insonorisation (60) selon une des revendications 9 à 11, **caractérisé en ce que** sur le véhicule de travail (1, 2, 30) est disposé au moins un microphone extérieur (21, 55) pour recueillir des bruits environnants qui sont émis par le système d'insonorisation (60).

13. Système d'insonorisation (60) selon la revendication 12, **caractérisé en ce que** l'unité de commande (24, 51) est agencée pour filtrer les bruits environnants recueillis.

14. Véhicule de travail agricole (1, 2, 30) comprenant un système d'insonorisation (60) selon une des revendications 9 à 13, une unité de commande (24, 51) du système d'insonorisation (60) étant agencée pour exécuter le procédé selon une des revendications 1 à 9.
